(19) **Europäisches Patentamt**
**European Patent Office**
**Office européen des brevets**

(11) **EP 1 717 634 B1**

(12) **FASCICULE DE BREVET EUROPEEN**

(45) Date de publication et mention
de la délivrance du brevet:
**20.01.2010 Bulletin 2010/03**

(51) Int Cl.:
***G02F 1/35*** (2006.01)

(21) Numéro de dépôt: **06300394.1**

(22) Date de dépôt: **21.04.2006**

(54) **Génération d'onde par compensation de déphasage de propagation d'ondes dans un milieu optiquement non linéaire**

Erzeugung optischen Wellen durch Kompensation der Phasenverschiebung in einem optisch nichtlinearen Medium.

Wave generation by compensation of propagation phase-lag in a nonlinear optical medium

(84) Etats contractants désignés:
**DE FR GB**

(30) Priorité: **25.04.2005 FR 0504145**

(43) Date de publication de la demande:
**02.11.2006 Bulletin 2006/44**

(73) Titulaire: **ONERA (Office National d'Etudes et de Recherches Aérospatiales)**
**92320 Châtillon (FR)**

(72) Inventeurs:
• **Haïdar, Riad**
**75011 PARIS (FR)**
• **Rosencher, Emmanuel**
**92220 BAGNEUX (FR)**
• **Primot, Jérôme**
**92320 CHATILLON (FR)**

(74) Mandataire: **Lapoux, Roland et al**
**Bloch & Bonnétat**
**23bis, rue de Turin**
**75008 Paris (FR)**

(56) Documents cités:
• **HAÏDAR RIAD ET AL: "Nonresonant quasi-phase matching in GaAs plates by Fresnel birefringence" APPLIED PHYSICS LETTERS, AIP, AMERICAN INSTITUTE OF PHYSICS, MELVILLE, NY, US, vol. 83, no. 8, 25 août 2003 (2003-08-25), pages 1506-1508, XP012035858 ISSN: 0003-6951**
• **RIAD HAÏDAR ET AL.: "Fresnel phase matching for three-wave mixing in isotropic semiconductors" JOURNAL OF OPTICAL SOCIETY OF AMERICA B, vol. 21, no. 8, août 2004 (2004-08), pages 1522-1534, XP002351070**
• **KOMINE H ET AL: "QUASI-PHASE-MATCHED SECOND-HARMONIC GENERATION BY USE OF A TOTAL- INTERNAL-REFLECTION PHASE SHIFT IN GALLIUM ARSENIDE AND ZINC SELENIDE PLATES" OPTICS LETTERS, OSA, OPTICAL SOCIETY OF AMERICA, WASHINGTON, DC, US, vol. 23, no. 9, 1 mai 1998 (1998-05-01), pages 661-663, XP000755365 ISSN: 0146-9592**
• **ADACHI S.: 'GaAs, AlAs, and AlxGa1-xAs: material parameters for use in research and device applications' JOURNAL OF APPLIED PHYSICS, AMERICAN INSTITUTE OF PHYSICS. NEW YORK, US vol. 58, no. 3, 01 Août 1985, pages R1 - R29, XP002434517 ISSN: 0021-8979**

**Description**

La présente invention concerne la génération paramétrique d'une onde monochromatique à partir de l'interaction de deux ondes monochromatiques colinéaires incidentes injectées dans un milieu à propriétés optiques non linéaires.

L'un des domaines d'application visés par l'invention est la bande III du spectre, soit des longueurs d'onde comprises entre 8 $\mu$m et 12 $\mu$m, pour laquelle des sources cohérentes accordables peu nombreuses sont constituées actuellement par des lasers à semiconducteurs tels que les lasers à cascade quantique.

La génération paramétrique optique offre cependant une voie de recherche prometteuse, même si elle requiert des matériaux en pénurie.

Ainsi, les semiconducteurs usuels de l'industrie électronique, tels que l'arséniure de gallium GaAs, le séléniure de zinc ZnSe ou le phosphure d'indium InP, sont d'excellents candidats pour la conversion paramétrique d'un rayonnement optique de la bande I du spectre, soit des longueurs d'onde comprises entre 1 $\mu$m et 3 $\mu$m, vers la bande III. En effet les semiconducteurs précédents

(i) présentent des performances non linéaires parmi les plus grandes des matériaux optiques,
(ii) ont des zones spectrales de transparence, et donc d'accordabilité spectrale, extrêmement étendues, par exemple de 0,5 $\mu$m à 20 $\mu$m pour le ZnSe,
(iii) bénéficient d'une technologie très développée, héritée de celle de la microélectronique,
(iv) sont aisément disponibles sur le marché mondial et ne sont soumis à aucun embargo, et
(v) sont potentiellement bon marché.

Ces matériaux sont cependant isotropes, ce qui interdit tout scénario d'accord de phase par biréfringence naturelle. Pour remédier à cette limitation, l'article de J.A. Armstrong et al, "Interactions between Light Waves in a Nonlinear Dielectric", Physical Revue, Vol. 127, No. 6, p. 1918 à 1939, 15 Septembre 1962, propose une technique alternative dite du quasi-accord de phase (QAP) qui réalise une conversion efficace. Le QAP consiste à compenser le déphasage de propagation des ondes, dû à la dispersion d'indice, en ajoutant artificiellement et périodiquement un déphasage supplémentaire. Cette remise en phase périodique des ondes est imposée après une distance périodique qui définit des tronçons au cours de la traversée du matériau par les ondes. Ces tronçons maximisent individuellement le rendement de conversion et ont une longueur égale à un nombre impair de longueurs de cohérence.

Selon l'article de R. Haïdar et al, "Fresnel phase matching for three-wave mixing in isotropic semiconductors", Journal Optical Society of America, Vol. 21, No. 8, p. 1522 à 1534, Août 2004, le quasi-accord de phase QAP recourt à la réflexion interne totale dans le milieu non linéaire: le déphasage subi par chaque onde à la réflexion compense le déphasage dû à la propagation dans un matériau optiquement non linéaire. L'accord de phase est obtenu par ce que l'on appelle la « biréfringence de Fresnel », puisque chaque onde subit un déphasage qui dépend notamment de sa fréquence et de sa polarisation. La distance entre deux "rebonds" contre des faces d'une plaque de matériau optiquement non linéaire est à chaque fois choisie strictement égale à un nombre impair de longueurs de cohérence pour un QAP résonant, ou proche d'un nombre impair de longueurs de cohérence pour un QAP non résonant afin de maximiser la conversion sur chaque tronçon élémentaire entre deux rebonds successifs (voir également "Nonresonant quasi-phase matching in GaAs plates by Fresnel birefringence", HAÏDAR Riad et al, APPLIED PHYSICS LETTERS, AIP, AMERICAN INSTITUTE OF PHYSICS, MELVILLE, NY, US, vol. 83, no. 8, 25 août 2003, pages 1506-1508). L'onde générée en sortie est alors le résultat de l'interférence constructive entre les contributions individuelles de toutes les ondes.

Le rendement de conversion $\eta$ d'un convertisseur de longueur d'onde en QAP est proportionnel au carré du nombre N de remises en phase et donc du nombre de rebonds dans le cas du QAP par réflexion interne totale : $\eta \propto N^2$, indépendamment de l'épaisseur de matériau traversée. Le rendement de conversion du QAP reste néanmoins limité. Dans le meilleur des cas, pour un matériau de longueur donnée, il ne peut dépasser 40 % du rendement que permettrait l'accord de phase parfait APP, obtenu par exemple par biréfringence naturelle.

L'invention a pour objectif d'accroître considérablement le rendement de conversion par unité de longueur. Contrairement aux idées reçues, cet objectif n'est pas nécessairement atteint en maximisant le rendement de conversion de chaque tronçon élémentaire entre deux rebonds successifs.

Pour atteindre cet objectif, un procédé pour générer à partir de première et deuxième ondes monochromatiques colinéaires traversant un milieu optiquement non linéaire une troisième onde monochromatique, le milieu induisant entre les trois ondes un déphasage de propagation qui a la valeur $\pi$ si les trois ondes parcourent une longueur de cohérence dans le milieu et qui est compensé périodiquement à la valeur 0 modulo $2\pi$ chaque fois que les trois ondes ont parcouru une distance dans le milieu, est caractérisé en ce que la distance est inférieure ou égale à la moitié de la longueur de cohérence.

Comme on le verra dans la suite, la longueur de cohérence est une distance dans le milieu optiquement non linéaire à l'intérieur de laquelle l'interaction entre les trois ondes est constructive et donc le rendement de conversion croît. Selon l'invention, le déphasage de propagation entre les trois ondes est compensé à la valeur 0 modulo $2\pi$ par

une réflexion interne totale des trois ondes sur des faces parallèles bordant le milieu optiquement non linéaire et distantes d'une épaisseur inférieure à la distance périodiquement parcourue par les ondes et appelée ci-après "distance périodique".

L'accord de phase selon l'invention est ainsi "fractionnaire" en ce sens que la distance périodique entre deux rebonds successifs est une fraction de la longueur de cohérence, par exemple la moitié environ de la longueur de cohérence, ce qui permet d'accroître le rendement de conversion linéique du milieu optiquement non linéaire, isotrope ou anisotrope, et de le rendre comparable au rendement de conversion qui serait obtenu idéalement par un accord de phase parfait. Les faibles valeurs de la distance périodique favorisent un meilleur rendement de conversion. L'invention permet d'atteindre, pour un matériau donné, des rendements de conversion linéiques comparables à ceux de l'accord de phase parfait, et toujours supérieurs à ceux pour les quasi-accords de phase usuels. Typiquement, le rendement de conversion linéique peut atteindre le double de celui pour un quasi-accord de phase QAP.

L'accroissement du rendement linéique grâce à l'accord de phase fractionnaire selon l'invention répond à un enjeu important relatif à la production de sources optiques cohérentes de forte puissance qui dépend du rendement de conversion linéique des matériaux. Pour passer de la génération paramétrique optique à l'oscillation paramétrique optique nettement plus efficace, il est en effet nécessaire d'atteindre un fort rendement de conversion sur la longueur de matériau la plus courte possible. Les rendements obtenus par les techniques de quasi-accord de phase QAP usuelles pour la génération d'une onde dans certaines régions du spectre, telles que la bande III pour des longueurs d'onde de la dizaine de micromètre, restent en général faibles. L'accord de phase fractionnaire selon l'invention permet de surmonter cette limitation.

L'invention concerne également un dispositif de génération d'onde pour la mise en oeuvre du procédé de l'invention. Il comprend un milieu optiquement non linéaire qui est adapté à recevoir deux ondes monochromatiques colinéaires incidentes pour générer une onde monochromatique, qui est limité par deux grandes faces parallèles entre lesquelles les ondes se réfléchissent selon un angle de réflexion supérieur aux angles critiques de réflexion totale dans le milieu optiquement non linéaire pour les trois ondes, et est adapté à induire entre les trois ondes un déphasage de propagation ayant la valeur $\pi$ si les trois ondes parcourent une longueur de cohérence dans le milieu et à être compensé périodiquement à la valeur 0 modulo $2\pi$ chaque fois que les trois ondes ont parcouru une distance dans le milieu égale au rapport de l'épaisseur du milieu entre les grandes faces sur le cosinus de l'angle de réflexion. Le dispositif de génération d'onde est caractérisé en ce que la distance est inférieure ou égale à la moitié de la longueur de cohérence.

Le milieu optiquement non linéaire peut être une plaque de semiconducteur pouvant avoir une épaisseur inférieure à 50 $\mu$m environ.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :

- la figure 1 est une section longitudinale schématique d'un convertisseur de longueur d'onde pour dispositif de génération d'onde selon l'invention ;
- les figures 2, 3 et 4 montrent schématiquement un moyen d'injection d'onde et un moyen d'extraction d'onde pour le convertisseur de longueur d'onde respectivement selon trois réalisations ;
- la figure 5 est un diagramme du rendement de conversion en fonction du déphasage de propagation pour un désaccord de phase et un quasi-accord de phase tel que la distance de remise en phase périodique des ondes est égale à la longueur de cohérence ;
- la figure 6 est un diagramme du rendement de conversion en fonction du carré de la longueur d'un matériau optiquement non linéaire pour différents rapports de la distance de remise en phase périodique sur la longueur de cohérence ; et
- la figure 7 est un diagramme du rendement de conversion, exprimé en pourcentage par rapport à l'accord de phase parfait, en fonction de la distance de remise en phase périodique pour montrer l'accroissement considérable du rendement linéique selon l'accord de phase fractionnaire de l'invention.

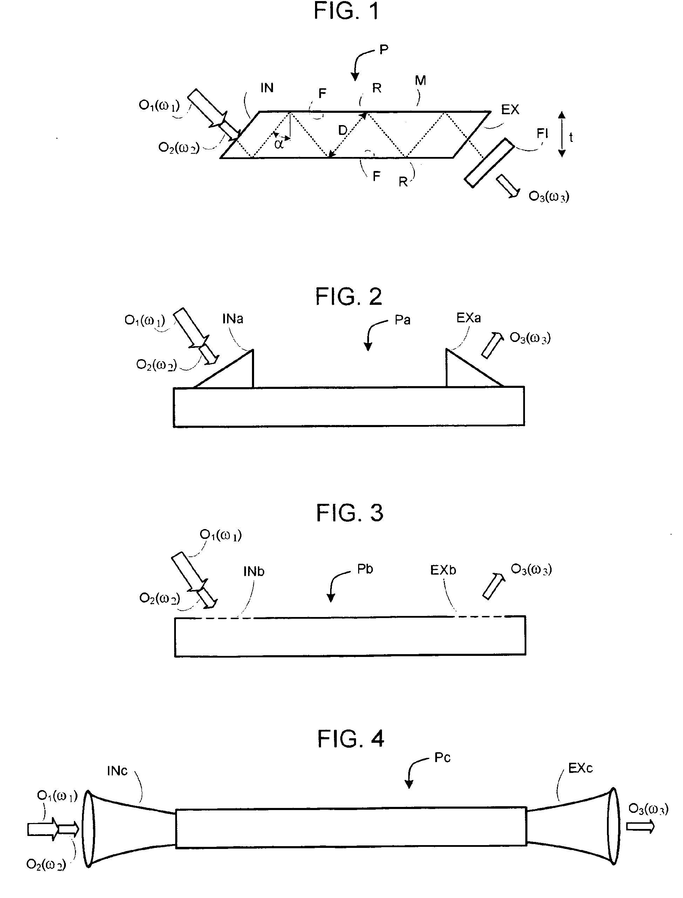

Selon une réalisation préférée de l'invention montrée à la figure 1, un convertisseur de longueur d'onde mettant en oeuvre le procédé de génération d'onde monochromatique comprend un matériau isotrope ou anisotrope, optique ou électro-optique M sous la forme d'une plaque mince P en tant que milieu optiquement non linéaire.

Comme cela est connu, deux ondes électromagnétiques monochromatiques colinéaires incidentes $O_1$ et $O_2$ ayant des longueurs d'onde $\lambda_1$ et $\lambda_2$ sont injectées à une extrémité d'entrée du convertisseur de longueur d'onde à travers un moyen d'injection d'onde IN. Puis les ondes $O_1$ et $O_2$ interagissent non linéairement entre elles par combinaison de longueurs d'onde dans le convertisseur pour former une troisième onde électromagnétique monochromatique $O_3$ ayant une longueur d'onde $\lambda_3$. Finalement l'onde $O_3$ est extraite à une extrémité de sortie du convertisseur opposée à l'extrémité d'entrée à travers un moyen d'extraction d'onde EX, et isolée à travers un moyen de filtrage FI. La troisième onde $O_3$ est colinéaire aux deux autres ondes $O_1$ et $O_2$ au cours de la traversée du matériau non linéaire M par les trois

ondes. Les fréquences $F_1=\omega_1/2\pi=k_1c/(2\pi n_1)$ , $F_2=\omega_2/2\pi=k_2c/(2\pi n_2)$ et $F_3=\omega_3/2\pi=k_3c/(2\pi n_3)$ correspondant aux longueurs d'onde $\lambda_1$, $\lambda_2$ et $\lambda_3$ vérifient la relation :

$$F_3 \;=\; F_1 \;\pm\; F_2, \;\; \text{soit} \;\; \omega_3 \;=\; \omega_1 \;\pm\; \omega_2$$

où $k_1=2\pi n_1/\lambda_1$, $k_2=2\pi n_2/\lambda_2$ et $k_3=2\pi n_3/\lambda_3$ sont des nombres d'onde, $n_1$, $n_2$ et $n_3$ sont des indices de réfraction du matériau M pour les fréquences $F_1$, $F_2$ et $F_3$, et c la vitesse de la lumière dans le vide.

Par exemple, les ondes $O_1$ et $O_2$ sont des faisceaux optiques du proche infrarouge émis par deux sources laser et ont leurs longueurs d'onde $\lambda_1$ et $\lambda_2$ comprise entre 1 $\mu$m et 3 $\mu$m, et la longueur d'onde $\lambda_3$ de l'onde $O_3$ est incluse dans la bande III du spectre, soit une longueur d'onde $\lambda_3$ comprise entre 8 $\mu$m et 12 $\mu$m. Le matériau M optiquement non linéaire est par exemple un semiconducteur isotrope tel que l'arséniure de gallium GaAs ou le séléniure de zinc ZnSe, ou un matériau ferroélectrique biréfringent. La plaque a une épaisseur constante t de l'ordre de plusieurs dizaines ou centaines de microns. La plaque présente deux grandes faces parallèles F formant des dioptres matériau - air (ou un autre diélectrique, pourvu qu'il soit d'indice inférieur à celui du matériau de la plaque) ayant une grande qualité optique pour réfléchir en zig-zag de "rebond en rebond" R les ondes ainsi guidées dans le matériau M depuis le moyen d'injection d'onde IN vers le moyen d'extraction d'onde EX. La plaque P dans laquelle s'opère la conversion d'onde se comporte alors comme un guide d'ondes multimode pour chaque onde $O_1$, $O_2$, $O_3$ qui se réfléchit totalement sur les grandes faces F avec un angle de réflexion $\alpha$ supérieur à un angle critique de réflexion totale respectif dans le matériau optiquement non linéaire M.

En variante, une onde électromagnétique monochromatique incidente est injectée à l'extrémité d'entrée du convertisseur de longueur d'onde à travers un moyen d'injection d'onde IN pour générer dans le convertisseur deux ondes électromagnétiques monochromatiques colinéaires dont au moins une est extraite à l'extrémité de sortie du convertisseur.

L'invention n'est pas limitée aux valeurs précédentes de longueurs d'onde. Les longueurs d'onde $\lambda_1$, $\lambda_2$ et $\lambda_3$ des ondes électromagnétiques $O_1$, $O_2$ et $O_3$ peuvent appartenir indifféremment à n'importe quelle bande spectrale, de l'ultraviolet à l'infrarouge, y compris le domaine visible. A priori, les longueurs d'onde $\lambda_1$, $\lambda_2$ et $\lambda_3$ sont différentes entre elles. Cependant les longueurs d'onde $\lambda_1$ et $\lambda_2$ des ondes colinéaires incidentes $O_1$ et $O_2$ peuvent être égales et la longueur d'onde $\lambda_3$ peut être plus grande ou plus petite qu'au moins l'une des longueurs d'onde $\lambda_1$ et $\lambda_2$. Le convertisseur de longueur d'onde peut alors augmenter la longueur d'onde, ou bien diminuer la longueur d'onde.

De manière schématique dans la figure 1, le moyen d'injection d'onde IN et le moyen d'extraction d'onde EX sont représentés par des chants biseautés de la plaque mince P. Toutefois en pratique, les ondes sont injectées et extraites selon l'une des trois réalisations suivantes :

- injection des ondes $O_1$ et $O_2$ par prisme de couplage d'entrée INa et extraction de l'onde $O_3$ par prisme de couplage de sortie EXa aux extrémités d'une face de la plaque Pa, selon l'article de H. KOMINE "Quasi-phase-matched second-harmonic génération by use of a total-internal-reflection phase shift in gallium arsenide and zinc selenide plates", Optics Letters, Vol. 23, No. 9, p. 661 à 663, 1er Mai 1998, comme montré à la figure 2;
- injection des ondes $O_1$ et $O_2$ par réseau de couplage d'entrée macroscopique INb et extraction de l'onde $O_3$ par réseau de couplage de sortie macroscopique EXb, comme montré à la figure 3; les réseaux de couplage résultent de gravures dans des couches minces sur les extrémités d'une face de la plaque Pb pour former des zones ondulées selon l'article de D. PASCAL et al. "Optimized coupling of a Gaussian beam into an optical waveguide with a grating coupler : comparison of expérimental and theoretical results", Applied Letters, Vol. 36, No. 12, p. 2443 à 2447, 20 Avril 1997;
- injection directe des ondes $O_1$ et $O_2$ par focalisation dans un cône d'acceptance angulaire INc de la plaque Pc, sans mise en forme préalable des ondes $O_1$ et $O_2$ en faisceaux, de manière similaire à l'injection de lumière dans une fibre optique, et extraction de l'onde $O_3$ par un cône de sortie EXc, comme montré à la figure 4.

Le dispositif de génération d'onde selon l'invention n'est pas limité aux couples ci-dessus de moyen d'injection d'onde IN et de moyen d'extraction d'onde EX en entrée et sortie du convertisseur de longueur d'onde. Selon deux autres exemples, le dispositif de génération d'onde comprend un prisme de couplage et un réseau de couplage. Soit en entrée le prisme de couplage injecte les deux ondes incidentes dans le milieu optiquement non linéaire M et en sortie le réseau de couplage extrait l'onde à générer du milieu, soit en entrée le réseau de couplage injecte les deux ondes incidentes dans le milieu et en sortie le prisme de couplage extrait l'onde à générer du milieu.

En revenant à la figure 1, la dépendance de l'intensité $I_3$ de l'onde sortante $O_3$ résultant de l'interaction des deux ondes incidentes $O_1$ et $O_2$ d'intensités respectives $I_1$ et $I_2$ dans le matériau optiquement non linéaire M de la plaque P dans lequel les ondes se propagent selon une longueur totale donnée LP, correspondant à N rebonds R des ondes, peut s'écrire sous la forme suivante, en supposant une réflexion interne totale sans perte de chaque onde à chaque rebond R et donc un coefficient de réflexion égal à 1 pour chaque onde $O_1$, $O_2$ et $O_3$ :

$$I_3 = \frac{Z_0\omega_3^2}{2c^2}\frac{d_{eff}^2}{n_1 n_2 n_3}(ND)^2\left(\frac{\sin\frac{\Delta kD}{2}}{\frac{\Delta kD}{2}}\right)^2\left(\frac{\sin(\frac{N\Delta\phi}{2})}{N\sin(\frac{\Delta\phi}{2})}\right)^2 I_1 I_2 \qquad (1)$$

où $I_1$, $I_2$ et $I_3$ désignent respectivement les intensités des ondes $O_1$, $O_2$ et $O_3$,
$Z_0$ est l'impédance du vide (377 Ohms),
$d_{eff}$ est la susceptibilité électrique non linéaire d'ordre 2 du matériau M,
N est le nombre de rebonds R à l'intérieur de la plaque P pour la longueur donnée LP=ND,
D est la distance entre deux rebonds successifs,
$\Delta k$ le désaccord de phase entre les trois ondes, soit selon un premier exemple $\Delta k = (k_1 - k_2 - k_3)$ en supposant $k_1 > k_2 \geq k_3$ et donc $F_1 > F_2 \geq F_3$ pour un convertisseur augmentant la longueur d'onde, ou selon un deuxième exemple $\Delta k = (k_3 - (k_2 + k_1))$ en supposant $k_3 > k_2 \geq k_1$ et donc $F_3 > F_2 \geq F_1$ un convertisseur diminuant la longueur d'onde, et $\Delta\Phi$ est le déphasage global égal à $\Delta k D + \Phi_F + \varepsilon\pi$ subi par les ondes entre deux rebonds successifs R, avec $\Phi_F$ le déphasage de Fresnel différentiel des trois ondes en interaction, soit $\Phi_F = \varphi_1 - \varphi_2 - \varphi_3$ selon le premier exemple précédent ou $\Phi_F = \varphi_3 - \varphi_2 - \varphi_1$ selon le deuxième exemple précédent, $\varphi_1$, $\varphi_2$ et $\varphi_3$ étant les déphasages des ondes $O_1$, $O_2$ et $O_3$ à la réflexion, et $\varepsilon$ représentant l'éventuelle inversion de signe du coefficient $d_{eff}$ à la réflexion totale interne, soit $\varepsilon = 1$ si le signe change, et $\varepsilon = 0$ sinon.

Afin d'assurer le guidage des trois ondes $O_1$, $O_2$ et $O_3$ dans la plaque P faisant office de guide d'ondes multimode, et donc l'existence simultanée de modes aux fréquences $F_1$, $F_2$ et $F_3$ des ondes $O_1$, $O_2$ et $O_3$, il est nécessaire de satisfaire les relations suivantes :

$$k_1 D + \varphi_1 \equiv 0 \ \text{modulo} \ \pi,$$

$$k_2 D + \varphi_2 \equiv 0 \ \text{modulo} \ \pi,$$

$$k_3 D + \varphi_3 \equiv 0 \ \text{modulo} \ \pi.$$

Les deux premières relations ci-dessus rappellent que les deux ondes incidentes $O_1$ et $O_2$ peuvent avoir des caractéristiques physiques différentes, par exemple, avoir des polarisations croisées, ce qui se traduit par des déphasages de Fresnel différents.
Selon la technique antérieure, la condition de résonance et donc d'accord de phase entre deux rebonds successifs séparés de la distance périodique D impose que le déphasage global $\Delta\Phi = \Delta k D + \Phi_F + \varepsilon\pi$ subi par les ondes entre deux rebonds soit un multiple de $2\pi$, c'est-à-dire $\Delta\Phi \equiv 0$ modulo $2\pi$. Sous cette condition, l'intensité $I_3$ de l'onde sortante $O_3$ selon la relation (1) devient :

$$I_3 = \frac{Z_0\omega_3^2}{2c^2}\frac{d_{eff}^2}{n_1 n_2 n_3}(ND)^2\left(\frac{\sin\frac{\Delta kD}{2}}{\frac{\Delta kD}{2}}\right)^2 I_1 I_2 \qquad (2)$$

Ainsi l'intensité $I_3$ de l'onde sortante $O_3$ suit la croissance quadratique du nombre de rebonds R, soit $I_3 \propto N^2$, et est d'autant plus élevée que le nombre de rebonds est grand.
De la relation (2) est déduit le rendement de conversion $\eta = I_3/(I_1/I_2)$ par unité de longueur que l'invention vise

à maximiser :

$$\eta = \eta_{APP}\left(\frac{\sin\frac{\Delta kD}{2}}{\frac{\Delta kD}{2}}\right)^2 \qquad\qquad (3)$$

où

$$\eta_{APP} = \frac{Z_0\omega_3^2}{2c^2}\frac{d_{eff}^2}{n_1 n_2 n_3}(ND)^2$$

désigne le rendement de conversion de l'Accord de Phase Parfait APP, obtenu par exemple par un matériau biréfringent, et D est la distance entre deux remises en phase des ondes. La distance D correspond à la distance entre deux rebonds dans le cas du quasi-accord de phase QAP par réflexion interne totale, ou à la longueur de chaque "domaine" dans le QAP par inversion périodique de domaine avec un matériau ferroélectrique comme le niobate de lithium LiNbO$_3$, selon l'article de Martin M. FEJER et al, "Quasi-Phase-Matched Second Harmonic Génération : Tuning and Tolerances", IEEE JOURNAL OF QUANTUM ELECTRONICS, Vol. 28, No. 11, p. 2631 à 2654, Novembre 1992.

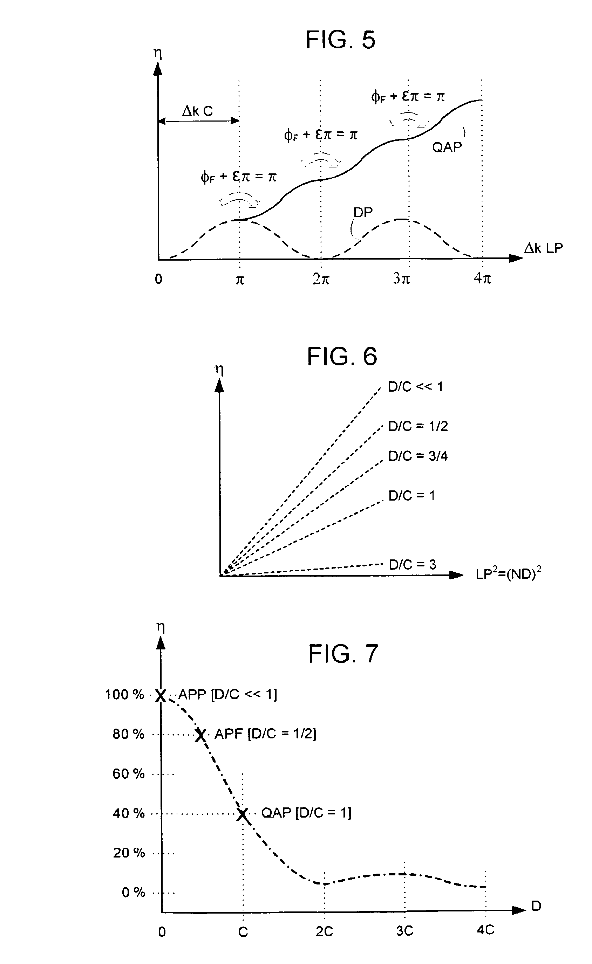

Dans un matériau optiquement non linéaire et non biréfringent usuel, il y a désaccord de phase DP et le rendement de conversion η varie sinusoïdalement avec une période de déphasage de propagation Δk LP = Δk 2C = 2π, comme montré en trait pointillé à la **figure 5**. C= π/Δk est la longueur de cohérence correspondant tantôt à une demi-période au cours de laquelle les interférences entre les trois ondes O$_1$, O$_2$ et O$_3$ sont constructives et le rendement de conversion croît jusqu'à un point d'inflexion, tantôt à une demi-période au cours de laquelle les interférences entre les trois ondes O$_1$, O$_2$ et O$_3$ sont destructives et le rendement de conversion décroît depuis le point d'inflexion jusqu'à zéro.

La situation du quasi-accord de phase QAP est obtenue en compensant périodiquement ce déphasage de propagation. De manière artificielle, à chaque demi-période sur deux, une inversion de domaine peut être créée afin de ne conserver qu'une interaction constructive entre les trois ondes O$_1$, O$_2$ et O$_3$ et une croissance du rendement de conversion η après chaque point d'inflexion pour Δk D = nπ, avec n un entier positif, comme montré en trait plein à la figure 5. Par exemple selon la technique antérieure, une tension électrique élevée est appliquée sur le matériau ferroélectrique entre les premier et deuxième rebonds, soit entre C = π/Δk et 2C = 2π/Δk, puis entre les troisième et quatrième rebonds, soit entre 3C = 3π/Δk et 4C = 4π/Δk, et ainsi de suite, afin d'ajouter artificiellement un déphasage de π et maintenir la croissance du rendement de conversion. Ainsi, d'après la relation (3), le rendement de conversion d'un Quasi Accord de Phase QAP est atteint lorsque le déphasage de propagation a la valeur Δk D/2 = π/2, c'est-à-dire pour la longueur de cohérence D=C.

De manière équivalente, le déphasage de Fresnel Φ$_F$ dû à la réflexion totale de chaque onde sur les faces F de la plaque P montrée à la figure 1 ajoute un déphasage supplémentaire de π à chaque point d'inflexion de manière à remettre à zéro le déphasage de propagation, soit π + π = 0 modulo 2π. Le déphasage de Fresnel permet ainsi de compenser à la valeur 0 modulo 2π le déphasage entre les trois ondes Δk D/2 = Δk C/2 = π/2 dû à la propagation dans le matériau optiquement non linéaire M chaque fois que les trois ondes O$_1$, O$_2$ et O$_3$ ont parcouru dans le matériau la distance périodique égale à la longueur de cohérence D=C, ou un nombre impair de longueurs de cohérence C, 3C, 5C et ainsi de suite, selon l'article précité de R. Haïdar et al.

Selon **l'invention,** au lieu de tenter d'atteindre une efficacité maximale avec le quasi accord de phase, la distance périodique D entre deux rebonds successifs R des ondes O$_1$, O$_2$ et O$_3$ est inférieure ou égale à la moitié de la longueur de cohérence C, afin que le rendement de conversion η selon la relation (3) sur un tronçon donné entre deux rebonds par réflexion totale ou par inversion de domaine n'atteigne pas de point d'inflexion à Δk D/2 = Δk C/2 = π/2. En d'autres termes, le rendement de conversion selon l'invention n'annule, ni n'inverse sa progression, comme c'est le cas selon la technique antérieure et demeure toujours croissant en fonction du déphasage de propagation. La technique selon l'invention peut être appelée "Accord de Phase Fractionnaire" APF parce que la distance D est une fraction de la longueur de cohérence C. L'invention tire le meilleur parti de chaque tronçon en terme de rendement de conversion linéique.

Ainsi en référence à la figure 5, l'invention n'est réalisable qu'à la condition que le processus de déphasage choisi, par exemple le déphasage de Fresnel Φ$_F$, rattrape plus tôt le déphasage de propagation Δk D qui est donc strictement inférieur à π, soit D < C = π/Δk.

Selon la relation (3) et comme montré à la **figure 6,** plus la distance de remise en phase périodique D définissant la longueur d'un tronçon élémentaire entre deux rebonds successifs R est faible, plus le rendement de conversion global est élevé pour une longueur donnée LP=ND de matériau M. Lorsque la distance D tend vers 0, la situation idéale de l'accord de phase parfait APP est atteinte : les ondes incidentes $O_1$ et $O_2$ restent en phase avec l'onde générée $O_3$ pendant toute la traversée du matériau, et le déphasage de propagation est alors en permanence compensé de sorte que le rendement de conversion reste bloqué sur sa meilleure pente de croissance qui est la pente à l'origine. Cependant l'accord de phase parfait nécessite l'usage d'un matériau biréfringent peu disponible.

Selon la **figure 7,** le rendement de conversion selon l'accord de phase fractionnaire APF de l'invention peut atteindre 80 % environ pour une distance de remise en phase périodique D égale à une demi-longueur de cohérence C. Le rendement APF est ainsi beaucoup plus élevé que le rendement de conversion selon le quasi-accord de phase QAP de l'ordre de 40 % mais pour une distance périodique égale à la longueur de cohérence, soit le double de la distance périodique selon l'invention.

Le dispositif de génération d'onde selon l'invention est basé sur la réflexion interne totale à chaque rebond R sur l'une des faces principales F de la plaque P. Le déphasage de Fresnel $\Phi_F$ peut atteindre toutes les valeurs comprises entre 0 et $2\pi$, et peut compenser n'importe quel déphasage de propagation $\Delta k\,D$ entre les trois ondes, avec D < C, pour que la somme de ces deux déphasages soit égale à 0 modulo $2\pi$.

A titre d'**exemple,** à partir de deux ondes électromagnétiques monochromatiques colinéaires incidentes $O_1$ et $O_2$ ayant des longueurs d'onde identiques $\lambda_1$ et $\lambda_2$ par exemple égales à $\lambda$ = 10, 6 $\mu$m correspondant à une fréquence fondamentale F = $\omega_1/2\pi$ = $\omega_2/2\pi$ = $\omega/2\pi$, le dispositif de l'invention génère le deuxième harmonique 2F = $2\omega/2\pi$ en tant que fréquence d'une troisième onde électromagnétique monochromatique $O_3$ ayant une longueur d'onde $\lambda_3$ = 5,3 $\mu$m. Une étude combinée des conditions d'accord de phase fractionnaire APF et de guidage des ondes impose des points discrets de fonctionnement, ce qui se traduit en termes de caractéristiques géométriques de la plaque P convertisseur de longueur d'onde. La plaque P est selon un exemple préféré en un matériau semiconducteur isotrope M comme l'arséniure de gallium GaAs. La longueur de cohérence

$$C = \pi/\Delta k = \pi/(k_3 - 2k) = 1/(2n_3/\lambda_3 - 4\,n/\lambda)$$

étant de l'ordre de la centaine de microns l'épaisseur maximale t de la plaque P est de l'ordre de la cinquantaine de microns. Cette épaisseur est atteinte par exemple par polissage mécano-chimique de la plaque. La configuration de polarisation des ondes $O_1(\omega)$, $O_2(\omega)$ et $O_3(2\omega)$ est pps, c'est-à-dire les ondes incidentes $O_1$ et $O_2$ sont polarisées parallèlement au plan d'incidence et l'onde générée $O_3$ est polarisée orthogonalement au plan d'incidence. L'angle de réflexion interne totale $\alpha$ des trois ondes $O_1(\omega)$, $O_2(\omega)$ et $O_3(2\omega)$ est environ 17, 9° et supérieur aux angles critiques de réflexion totale dans l'arséniure de gallium respectivement pour les trois ondes $O_1(\omega)$, $O_2(\omega))$ et $O_3(2\omega)$. L'épaisseur t est alors égale au produit de la distance périodique D par le cosinus de l'angle de réflexion $\alpha$, soit une fraction D/C = t/C(cos $\alpha$) de l'ordre de 1/2.

Selon d'autres configurations de polarisation sss et sps, ou pss, pour lesquelles l'onde générée $O_3$ est polarisée orthogonalement au plan d'incidence, les ondes incidentes $O_1$ et $O_2$ sont polarisées orthogonalement au plan d'incidence, ou sont polarisées respectivement orthogonalement et parallèlement au plan d'incidence. Selon encore d'autres configurations de polarisation ssp, ppp et spp, ou psp, pour lesquelles l'onde générée $O_3$ est polarisée parallèlement au plan d'incidence, les ondes incidentes $O_1$ et $O_2$ sont polarisées orthogonalement ou parallèlement au plan d'incidence, ou sont polarisées respectivement orthogonalement et parallèlement au plan d'incidence.

L'invention n'est pas limitée à la réalisation décrite ci-dessus et le milieu optiquement non linéaire peut être un fluide, liquide ou gaz, optiquement non linéaire enfermé dans une enceinte dont une paroi offre une extrémité d'entrée de convertisseur de longueur d'onde qui est transparente aux première et deuxième ondes incidentes $O_1$ et $O_2$ et une autre paroi offre une extrémité de sortie de convertisseur de longueur d'onde qui est transparente à la troisième onde générée $O_3$.

**Revendications**

1. Procédé pour générer à partir de première et deuxième ondes monochromatiques colinéaires ($O_1$, $O_2$) traversant un milieu optiquement non linéaire (M) une troisième onde monochromatique ($O_3$), le milieu induisant entre les trois ondes un déphasage de propagation, qui a la valeur $\pi$ si les trois ondes parcourent une longueur de cohérence (C) dans le milieu et qui est compensé périodiquement à la valeur 0 modulo $2\pi$ chaque fois que les trois ondes ont parcouru une distance prédeterminée (D) dans le milieu, **caractérisé en ce que** la distance prédeterminée (D) est inférieure ou égale à la moitié de la longueur de cohérence (C).

**2.** Procédé conforme à la revendication 1, selon lequel le déphasage de propagation entre les trois ondes est compensé à la valeur 0 modulo $2\pi$ par une réflexion interne totale des trois ondes sur des faces parallèles (F) bordant le milieu optiquement non linéaire (M) et distantes d'une épaisseur (t) inférieure à la distance (D).

**3.** Procédé conforme à la revendication 1 ou 2, selon lequel le milieu optiquement non linéaire est un fluide dans une enceinte dont une paroi est transparente aux première et deuxième ondes et une paroi est transparente à la troisième onde.

**4.** Procédé conforme à l'une quelconque des revendications 1 à 43, selon lequel les première et deuxième ondes ont la même longueur d'onde.

**5.** Dispositif de génération d'onde comprenant un milieu optiquement non linéaire (M) et un moyen (IN) pour injecter deux ondes monochromatiques de longueurs d'ondes prédéterminées colinéaires incidentes ($O_1$, $O_2$) dans le milieu optiquement non linéaire pour générer une onde monochromatique ($O_3$), le milieu optiquement non linéaire étant limité par deux grandes faces parallèles (F) entre lesquelles les ondes se réfléchissent selon un angle de réflexion ($\alpha$) supérieur aux angles critiques de réflexion totale dans le milieu optiquement non linéaire (M) pour les trois ondes, et étant adapté à induire entre les trois ondes un déphasage de propagation, qui a la valeur $\pi$ si les trois ondes parcourent une longueur de cohérence (C) dans le milieu et qui est compensé périodiquement à la valeur 0 modulo $2\pi$ chaque fois que les trois ondes ont parcouru une distance (D) dans le milieu égale au rapport de l'épaisseur (t) du milieu entre les grandes faces (F) sur le cosinus de l'angle de réflexion ($\alpha$), **caractérisé en ce que** la distance (D) est inférieure ou égale à la moitié de la longueur de cohérence (C) correspondant aux longueurs d'ondes prédéterminées.

**6.** Dispositif conforme à la revendication 5, dans lequel le milieu optiquement non linéaire est un semiconducteur ou un matériau ferroélectrique sous la forme d'une plaque.

**7.** Dispositif conforme à la revendication 5 ou 6, **caractérisé en ce que** le moyen pour injecter comprend un prisme (INa) pour injecter les deux ondes incidentes dans ledit milieu et le dispositif comprend un prisme (EXa) pour extraire l'onde à générer dudit milieu.

**8.** Dispositif conforme à la revendication 5 à ou 6, **caractérisé en ce que** le moyen pour injecter comprend un réseau de couplage (INb) pour injecter les deux ondes incidentes dans ledit milieu et le dispositif comprend un réseau de couplage (EXb) pour extraire l'onde à générer dudit milieu.

**9.** Dispositif conforme à la revendication 5 à ou 6, **caractérisé en ce que** le moyen pour injecter comprend un cône d'acceptance (INc) pour injecter les deux ondes incidentes dans ledit milieu et le dispositif comprend un cône de sortie (EXc) pour extraire l'onde à générer dudit milieu.

**10.** Dispositif conforme à la revendication 5 ou 6, comprenant un prisme et un réseau de couplage, l'un des prisme et réseau de couplage injectant les deux ondes incidentes dans ledit milieu et l'autre des prismes et réseau de couplage extrayant l'onde à générer dudit milieu.

**Claims**

**1.** A method for generating, from first and second collinear incident monochromatic waves ($O_1$, $O_2$) crossing a nonlinear optical medium (M), a third monochromatic wave ($O_3$), the medium inducing between the three waves a propagation phase-shift, that has the value $\pi$ if the three waves travel a coherence length (C) in the medium and that is periodically compensated at the value 0 modulo $2\pi$ each time that the three waves have travelled a predetermined distance (D) in the medium, **characterized in that** the predetermined distance (D) is less than or equal to half the coherence length (C).

**2.** A method according to claim 1, wherein the propagation phase-shift between the three waves is compensated at the value 0 modulo $2\pi$ by a total internal reflection of the three waves on parallel surfaces (F) bordering the nonlinear optical medium (M) and removed from a thickness (t) less than the distance (D).

**3.** A method according to claim 1 or 2, wherein the nonlinear optical medium is a fluid within a housing in which a wall is transparent to the first and second waves and a wall is transparent to the third wave.

**4.** A method according to any one of claims 1 to 3, wherein the first and second waves have the same wavelength.

**5.** A wave generating device including a nonlinear optical medium (M) and means for injecting two collinear incident monochromatic waves ($O_1$, $O_2$) having predetermined wavelengths in the nonlinear optical medium so as to generate a monochromatic wave ($O_3$), the nonlinear optical medium being limited by two large parallel surfaces (F) between which the waves are reflected according to a reflection angle ($\alpha$) more than total critical reflection angles in the nonlinear optical medium (M) for the three waves, and being adapted to induce between the three waves a propagation phase-shift, that has a value $\pi$ if the three waves travel a coherence length (C) in the medium and that is periodically compensated at the value 0 modulo $2\pi$ each time that the three waves have travelled a distance (D) in the medium equal to the ratio of the thickness (t) of the medium between the large surfaces (F) on the cosine of the reflection angle ($\alpha$), **characterized in that** the distance (D) is less than or equal to half the coherence length (C) corresponding to the predetermined wavelengths.

**6.** A device according to claim 5, wherein the nonlinear optical medium is a semiconductor or a ferroelectric material in the form of a plate.

**7.** A device according to claim 5 or 6, **characterized in that** the injecting means comprises a prism (INa) for injecting the two incident waves in said medium and the device comprises a prism (EXa) for extracting the wave to be generated from said medium.

**8.** A device according to claim 5 or 6, **characterized in that** the injecting means comprises a grating coupler (INb) for injecting the two incident waves in said medium and the device comprises a grating coupler (EXb) for extracting the wave to be generated from said medium.

**9.** A device according to claim 5 or 6, **characterized in that** the injecting means comprises a acceptance cone (INc) for injecting the two incident waves in said medium and the device comprises an output cone (EXc) for extracting the wave to be generated from said medium.

**10.** A device according to claim 5 or 6, comprising a prism and a grating coupler, the one of the prism and grating coupler injecting the two incident waves in said medium and the other of the prism and grating coupler extracting the monochromatic wave to be generated from said medium.

**Patentansprüche**

**1.** Verfahren zum Erzeugen aus ersten und zweiten kollinearen monochromatischen Wellen ($O_1$, $O_2$), die ein optisch nicht lineares Medium (M) durchqueren, einer dritten monochromatischen Welle ($O_3$), wobei das Medium zwischen den dritten Wellen eine Ausbreitungsphasenverschiebung herbeiführt, die den Wert $\pi$ aufweist, wenn die drei Wellen eine Kohärenzlänge (C) in dem Medium durchlaufen, und der periodisch auf den Wert 0 mod $2\pi$ ausgeglichen wird, jedes Mal wenn die drei Wellen eine vorherbestimmte Strecke (D) in dem Medium zurückgelegt haben, **dadurch gekennzeichnet, dass** die vorherbestimmte Strecke (D) kleiner oder gleich der Hälfte der Kohärenzlänge (C) ist.

**2.** Verfahren nach Anspruch 1, wobei die Ausbreitungsphasenverschiebung zwischen den drei Wellen durch eine interne Totalreflexion der drei Wellen auf parallelen Seiten (F), die das optisch nicht lineare Medium (M) begrenzen und um eine Dicke (t), die kleiner ist als die Strecke (D), entfernt sind, auf den Wert 0 mod $2\pi$ ausgeglichen wird.

**3.** Verfahren nach Anspruch 1 oder 2, wobei das optisch nicht lineare Medium ein Fluid in einem Behälter ist, dessen eine Wand für die erste und zweite Welle transparent ist und eine Wand für die dritte Welle transparent ist.

**4.** Verfahren nach einem der Ansprüche 1 bis 3, wobei die ersten und zweiten Wellen die gleiche Wellenlänge aufweisen.

**5.** Vorrichtung zum Wellenerzeugen, umfassend ein optisch nicht lineares Medium (M) und ein Mittel (IN) zum Einkoppeln von zwei einfallenden kollinearen monochromatischen Wellen ($O_1$, $O_2$) mit vorherbestimmten Wellenlängen in das optisch nicht lineare Medium, um eine monochromatische Welle ($O_3$) zu erzeugen, wobei das optisch nicht lineare Medium durch zwei lange parallele Seiten (F) begrenzt ist, zwischen denen sich die Wellen in einem Reflexionswinkel ($\alpha$) spiegeln, der größer ist als die kritischen Winkel der Totalreflexion in dem optisch nicht linearen Medium (M) für die drei Wellen, und dazu geeignet ist, zwischen den drei Wellen eine Ausbreitungsphasenverschiebung herbeizuführen, die den Wert $\pi$ aufweist, wenn die drei Wellen eine Kohärenzlänge (C) in dem Medium durchlaufen, und der periodisch auf den Wert 0 mod $2\pi$ ausgeglichen wird, jedes Mal wenn die drei Wellen eine Strecke (D) in dem Medium zurückgelegt haben, die gleich dem Verhältnis der Dicke (t) des Mediums zwischen den langen Seiten (F) zum Kosinus des Reflexionswinkels ($\alpha$) ist, **dadurch gekennzeichnet, dass** die Strecke (D) kleiner oder gleich der Hälfte der Kohärenzlänge (C) ist, die den vorherbestimmten Wellenlängen entspricht.

6. Vorrichtung nach Anspruch 5, wobei das optisch nicht lineare Medium ein Halbleiter oder ein ferroelektrisches Material in Form einer Platte ist.

7. Vorrichtung nach Anspruch 5 oder6, **dadurch gekennzeichnet, dass** das Mittel zum Einkoppeln ein Prisma (INa) umfasst, um die beiden einfallenden Wellen in das Medium einzukoppeln, und die Vorrichtung ein Prisma (EXa) umfasst, um die zu erzeugende Welle aus dem Medium zu entnehmen.

8. Vorrichtung nach Anspruch 5 oder 6, **dadurch gekennzeichnet, dass** das Mittel zum Einkoppeln ein Koppelnetzwerk (INb) umfasst, um die beiden einfallenden Wellen in das Medium einzukoppeln, und die Vorrichtung ein Koppelnetzwerk (EXb) umfasst, um die zu erzeugende Welle aus dem Medium zu entnehmen.

9. Vorrichtung nach Anspruch 5 oder 6, **dadurch gekennzeichnet, dass** das Mittel zum Einkoppeln einen Akzeptanzkonus (INc) umfasst, um die beiden einfallenden Wellen in das Medium einzukoppeln, und die Vorrichtung einen Ausgangskonus (EXc) umfasst, um die zu erzeugende Welle aus dem Medium zu entnehmen.

10. Vorrichtung nach Anspruch 5 oder 6, umfassend ein Prisma und ein Koppelnetzwerk, wobei eines der Prismen und des Koppelnetzwerkes die beiden einfallenden Wellen in das Medium einkoppelt und das andere der Prismen und des Koppelnetzwerkes die zu erzeugende Welle aus dem Medium entnimmt.

# FIG. 1

# FIG. 2

# FIG. 3

# FIG. 4

## FIG. 5

$\eta$

$\Delta k\, C$

$\phi_F + \mathcal{E}\pi = \pi$

$\phi_F + \mathcal{E}\pi = \pi$

$\phi_F + \mathcal{E}\pi = \pi$

QAP

DP

$\Delta k\, LP$

0    $\pi$    $2\pi$    $3\pi$    $4\pi$

## FIG. 6

$\eta$

D/C << 1

D/C = 1/2

D/C = 3/4

D/C = 1

D/C = 3

$LP^2 = (ND)^2$

## FIG. 7

$\eta$

100 %    X APP [D/C << 1]

80 %    X APF [D/C = 1/2]

60 %

40 %    X QAP [D/C = 1]

20 %

0 %

D

0    C    2C    3C    4C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.A. ARMSTRONG et al.** Interactions between Light Waves in a Nonlinear Dielectric. *Physical Revue,* 15 Septembre 1962, vol. 127 (6), 1918-1939
- **R. HAÏDAR et al.** Fresnel phase matching for three-wave mixing in isotropic semiconductors. *Journal Optical Society of America,* Août 2004, vol. 21 (8), 1522-1534
- **HAÏDAR Riad et al.** *APPLIED PHYSICS LETTERS, AIP,* 25 Août 2003, vol. 83 (8), 1506-1508
- **H. KOMINE.** Quasi-phase-matched second-harmonic génération by use of a total-internal-reflection phase shift in gallium arsenide and zinc selenide plates. *Optics Letters,* 01 Mai 1998, vol. 23 (9), 661-663

- **D. PASCAL et al.** Optimized coupling of a Gaussian beam into an optical waveguide with a grating coupler : comparison of expérimental and theoretical results. *Applied Letters,* 20 Avril 1997, vol. 36 (12), 2443-2447
- **MARTIN M. FEJER et al.** Quasi-Phase-Matched Second Harmonic Génération : Tuning and Tolerances. *IEEE JOURNAL OF QUANTUM ELECTRONICS,* Novembre 1992, vol. 28 (11), 2631-2654